# EUROPEAN PATENT SPECIFICATION

(11) **EP 4 498 820 B1**
(45) Date of publication and mention of the grant of the patent: **14.01.2026**
(21) Application number: 23715239.2
(22) Date of filing: 17.03.2023
(51) Int. Cl.: A23C 19/076, A23C 19/09, A23C 9/142, A23C 19/06

(54) **A METHOD FOR THE MANUFACTURE OF A CREAM CHEESE**
VERFAHREN ZUR HERSTELLUNG VON RAHMKÄSE
PROCÉDÉ DE PRODUCTION DE FROMAGE À LA CRÈME

(30) Priority: 29.03.2022 GB 202204430
(43) Date of publication of application: 05.02.2025
(73) Proprietor: Intercontinental Great Brands LLC, East Hanover, NJ 07936 (US)
(72) Inventor: TORO-SIERRA, José, 82008 Unterhaching (DE); DANG, Christine Bich Phuong, 82008 Unterhaching (DE); WESTPHAL, Sven, 28217 Bremen (DE)
(74) Representative: Boult Wade Tennant LLP
(86) International application number: PCT/IB2023/052634
(87) International publication number: WO 2023/187541

(56) References cited:
- EP-A1- 1 561 383
- EP-A1- 3 001 910
- WO-A1-2006/057968
- WO-A1-2014/205340

## Description

The present invention relates to a method for the manufacture of a cream cheese. In particular, it relates to the provision of a cream cheese having a desirable smooth texture. The method permits the production of a cream cheese directly from so-called "thin whey" sources without an evaporation concentration step.

Cream cheese is a soft cheese made from ingredients including milk and cream, and is generally spreadable. It is also generally mild-tasting, however, flavourings can be added to give it a specific flavour, such as garlic cream cheese. Cream cheeses can include single cream cheese and double cream cheese. Cream cheese also typically comes in various fat contents, including full-fat, low-fat, and extra-light.

Cream cheese has been popular in many places around the world for many years. Cream cheese can be used in many different culinary areas, as the consumer desires, but is most commonly used on bagels, in salads, as an ingredient in flavoured spreads, frostings, and cheesecake, as well as being used as an ingredient in various food recipes, such as pastas and traybakes. Various different methods of making cream cheese have been developed and used over the years. Most of these methods typically involve standardizing cream and milk with a specific fat protein ratio, followed by pasteurization, fermentation, forming a coagulum, stirring, centrifugal separation, ultrafiltration or cloth to yield sour whey and concentrated curd, eventually blending the concentrated curd with cream, heating, possible addition of stabilizers and/or gums, and packaging the cream cheese. EP2649884 discloses a known method of producing cream cheese. WO2006/057968 A1, EP1561383 A1 and WO2014/205340 A1 disclose a process for the manufacture of a cream cheese product. Although stabilisers and additives can be incorporated into the cream cheese mixture, it is generally undesirable to include more additives in cream cheeses, as consumers prefer cream cheeses with more natural products, and minimum amounts of additives.

One of the challenges surrounding the manufacture of cream cheese in a plant that produces various different types of dairy products is that there are often waste streams of whey protein solutions that are produced from these processes, including waste streams of sweet whey protein from hard cheese making processes. Tackling this is of importance for environmental sustainability in the manufacturing of foods like cream cheese.

These waste streams often contain valuable ingredients that could be used in other dairy products, and are usually produced at specific points in the manufacture of other cheese or dairy products. In particular, various cheese-making processes result in side streams of sweet whey (also known as rennet whey), and/or acid whey (also known as sour whey). These can be produced in various amounts and concentrations at different stages of cheese or other dairy product manufacturing processes.

When one or more side streams of a whey protein solution are produced, they generally need to be used within a short period of time, and preferably as they are generated. If the whey protein solutions are not used quickly, large storage tanks are needed to store the solutions at reduced temperatures, or the solution must be disposed of, which is wasteful. Furthermore, using the waste streams of whey protein solutions can reduce the cost for the manufacturer, as these ingredients clearly come at a much lower cost than the alternative of buying the ingredients and having them transported to the plant.

In a preferred process to manufacture cream cheese, the cream cheese mixture is subjected to a texture-building heat-treatment step that is used to build up the creamy texture during manufacture of cream cheese. EP 2649884 describes a texturizing step done by subjecting the mixture to heating and shearing, for example at a temperature of from 65 to 90 °C. This texturizing step is performed on a mixture of the cheese curds and a whey protein concentrate. Before the texture building step, the whey protein concentrate is heat treated to denature the whey protein. This heat treatment step has generally been done using any conventional heating means. The heat treatment step is described as S6-1 or S6-2 in EP 2649884, and is usually done with simultaneous homogenization.

Before performing the texture building step it is necessary to functionalise the whey protein that forms the whey protein concentrate (WPC). The functionalization is achieved by applying thermal energy for a certain amount of time (e.g. 80 °C for 2 min holding time), to reach the desired denaturation degree of the whey proteins. Traditionally this is performed with ubiquitous heating devices, such as double jacketed tanks in a batch process. This usually comes with the challenges to stay within the desired denaturation range, especially with larger batches during full-scale production.

The functionalization of WPC is well known and has been discussed in a range of patents that focus on functionalization of WPC from sweet rennet whey US 7,579,029 B2, US 8,349,379 B2 and EP 1 698 231 B1. Such functionalised WPC is also described in EP 2 649 884 B1 and US 9,775,366 B2.

Continuous processes to functionalize whey protein concentrates exist in the market, such as scraped heat exchangers but come with the disadvantage of heavy scaling and protein build-up of the equipment due to the reactive nature of whey proteins in general.

Various other heating methods are known in the art. These include pasteurisation methods by batch heating, short time heating, or high temperature heating. Autoclaves can also be used for the heating of milk. The combined process of heating and homogenising involves forcing the mixture through small openings under high pressure with simultaneous heating to a predetermined temperature. These methods have been reliably used in cream cheese manufacturing methods.

Cavitation is generally known in the art as a method of providing a heat treatment. The process of cavitation generally includes heating, mixing and micro-particulating solutions, and has been known as an alternative heating method for dairy-containing mixtures. US 20180249733 discloses a process of microparticulating ideal whey protein with a cavitator to produce microparticulated ideal whey protein preparation having a creamy and thick texture. In particular, the microparticulated ideal whey protein preparation is used in a milk or dairy-based product, including cheese, yoghurt and quark.

WO2022/157611 discloses a method for the manufacture of a cream cheese.

It would be desirable to provide a method of manufacturing cream cheese that has a lower energy cost and which minimises issues with excess waste streams. Accordingly, it is desirable to provide a cream cheese with an improved or comparable texture, which can be obtained at a lower energy cost and/or to tackle at least some of the problems associated with the prior art or, at least, to provide a commercially viable alternative thereto.

According to a first aspect there is provided a method for the manufacture of a cream cheese, the method comprising:
(i) providing cheese curds,
(ii) providing a whey protein solution by blending a sweet rennet whey solution and an acid whey solution, wherein the sweet rennet whey solution is present in a greater amount by weight than the acid whey solution,
(iii) concentrating the whey protein solution by ultrafiltration to a whey protein concentration of from 5 to 15wt%, based on the weight of the concentrated whey protein solution,
(iv) subjecting the concentrated whey protein solution to a cavitation treatment sufficient to heat the concentrated whey protein solution to a temperature of at least 70°C to provide a heat-treated whey protein solution,
(v) mixing the cheese curds and the heat-treated whey protein solution to form a mixture, and
(vi) subjecting the mixture to a texture-building heat-treatment to form the cream cheese,
wherein the whey in the whey protein solution provided in step (ii) consists of whey from the sweet rennet whey solution and whey from the acid whey solution.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Cream cheese manufacture generally relies on the use of concentrated whey streams. This produces a whey protein concentrate (WPC) which is combined with cheese curds which, with further process steps, makes the cream cheese. These WPC are generally made in a process which involves the use of an evaporator. An evaporator is known to be a less reliable component of the standard cream cheese making process, so it is desirable to find a process which can work around the loss of this key component on a production line.

The inventors have now found a method for producing cream cheese from so-called "thin whey" sources. That is, the cream cheese is made without prior concentration of the whey sources. The method does not require the use of an evaporator for concentrating the whey sources or the whey protein solution (obtained by mixing whey sources). This helps to avoid the need for a key piece of equipment that may be out of service for prolonged periods. This is especially critical when working with whey streams obtained from other cheese making processes, such as hard cheese making, since the whey streams need to be used quickly to avoid them needing to be thrown away.

The inventors sought to make a cream cheese using a range of different whey sources, relying on ultrafiltration as an alternative approach to concentrate the protein content of the whey protein solution. Ultrafiltration is desirable because it is a conventional component of a cream cheese production system. However, the inventors found that when using a conventional heat treatment step to functionalise this whey protein concentrate obtained by ultrafiltration, the subsequent texture building step was too long to be commercially viable.

The inventors unexpectedly found that the use of a cavitation treatment sufficient to heat the whey protein solution to a temperature of at least 70°C allows the unconcentrated whey protein concentrate described herein to be used as an ingredient in the cream cheese. In particular, it was found that including a cavitation step to heat the ultrafiltration-concentrated whey protein solution unexpectedly resulted in a heat-treated whey protein solution that is compatible with being used in the texture-building heat-treatment step to develop and build a creamy texture.

The inventors have therefore found that a particular blend of whey proteins can be employed which, when functionalised by the new cavitation approach, lends itself to fast texturisation. This combination of a specific whey protein blend, concentration by ultrafiltration, and cavitation, provides a cream cheese with desirable physical properties and which can be produced in a relatively short texturizing step. This means that a commercially viable process can be provided which does not rely on a functioning evaporator (or the associated time and cost of running it). This process avoids the need for a pre-concentration step on any of the constituent whey protein sources.

Furthermore, the process of the present invention provides a cream cheese which is smoother, even though the whey streams were not subjected to an evaporation step beforehand. This is especially surprising since the same whey protein solution when subjected to a conventional functionalisation process (i.e. heat and not cavitation) does not lead to a desirable cream cheese. Rather, a conventional functionalisation leads to a less sweet cream cheese with an undesirable grainy texture.

The use of a cavitator is not conventional in cream cheese manufacture. In unpublished GB 2100677.0, filed 19 January 2021, however, the inventors provided an alternative method using cavitation technology to functionalize concentrates. This process requires the use of ideal whey which is obtained by microfiltration of milk. The use of this, generally in combination with an evaporator for the whey concentration, addressed issues whereby the presence of ideal whey when functionalised with a conventional heating method, as in EP 1 698 231 B1, would not texturize or build a desirable creamy texture and mouthfeel. That is, the inventors had found that a conventionally heat-treated whey protein concentrate (WPC) which comprises ideal whey cannot be used in the method of texture building as disclosed in EP2649884

According to the invention in unpublished GB 2100677.0, a compacted process was described in which the whey protein solution comprised ideal whey obtained by microfiltration, together with sweet whey obtained by rennet cheese making, sweet whey concentrate obtained by evaporation (either from ideal or rennet whey), and acid whey obtained by separation technology in cream cheese making. These whey streams were direct products of the combined process and so the process minimised its by-products. The whey protein levels were sufficiently high based on the use of ideal whey material and concentrated whey streams.

When this whey protein solution was subjected to mechanical and thermal energy by the means of hydrodynamic cavitation, it provided a functionalised whey protein concentrate that was surprisingly compatible with the texturizing step. However, the invention in unpublished GB 2100677.0 requires the use of concentrated whey protein sources and therefore, generally is dependent on an evaporator. In contrast the present invention does not involve an evaporator or, indeed, an ideal whey component.

The present invention relates to a method for the manufacture of a cream cheese. As noted above, a cream cheese is a soft cheese made from ingredients including milk and cream, and is generally spreadable and mild-tasting.

Cream cheese can be sold with a range of different fat contents. For example, ranges of cream cheese widely available are full-fat, low-fat, and extra-light cream cheese. Lighter cream cheeses tend to rely on the addition of more protein, gums and stabilisers in order to retain their desirable creamy texture.

The method involves a step of providing cheese curds. Suitable cheese curds for the manufacture of cream cheese are well known in the art. Cheese curds are the clotted solids obtained when milk is acidified by bacterial cultures or rennet. This production step also produces a sour (also known as acid) whey solution which can be used as a starting material for the method described herein.

Preferably, the cheese curds are obtained in a method comprising: providing a dairy liquid comprising cream, milk (either raw or processed milk that has been pasteurised and homogenised), and a micro-filtered milk concentrate; fermenting the dairy liquid to form the cheese curds and a sour whey; and separating the cheese curds from the sour whey by ultrafiltration. Preferably the sour whey can be used as the acid whey solution in step (ii).

This is the most efficient way to produce the desired curds for use in cream cheese manufacture. More preferably, the fermentation is by mesophilic fermentation. Optionally, the dairy liquid may also be pasteurised and homogenised before the fermentation step.

By a dairy liquid it is meant a liquid derived from milk or components thereof. In particular, a dairy liquid contains fractions including milk and/or cream components. Preferably, the dairy liquid predominantly comprises cream and optionally a milk protein concentrate.

Preferably, the dairy liquid is obtained by: separating milk into cream and skimmed milk, micro-filtering the skimmed milk to produce a micro-filtered milk concentrate as a retentate and sweet ideal whey as a permeate, and mixing the cream and micro-filtered milk concentrate together with milk to form the dairy liquid. This method is a reliable way of producing a dairy liquid with the desired properties for cream cheese manufacture. This process provides the micro-filtered milk concentrate desired to make the cheese curds.

The method comprises a further step of providing a whey protein solution. Whey is the liquid that remains after a dairy liquid has been curdled and then strained. Curdling is usually done by adding rennet or lactic acid to the dairy liquid to cause the casein to curdle and separate into lumps. Whey protein is usually produced as a by-product of the manufacture of cheese or casein, and has several commercial uses. In the manufacture of cream cheese the curdling is performed with the use of a culture which develops lactic acid and naturally curdles the milk solution. In the case of cream cheese, the dairy liquid is typically a protein fortified cream, with the protein being provided as a milk concentrate.

Preferably, the whey protein solution is provided at room temperature, and more preferably at a temperature of 10 °C or less. This is optimum for the stability of the whey protein solution.

There are various types of whey protein solutions, including acid whey and sweet whey. These categories are determined generally by the pH and how they are obtained. Sour whey has a pH around 4.7, such as 4.4 to 4.9, whereas sweet whey has a more neutral pH (around 6.5, such as 6.3-6.8).

Sweet whey may be further categorised into sweet rennet whey, which is a by-product resulting from the manufacture of rennet types of hard cheese, like cheddar cheese and Swiss cheese. It may also be known as "rennet whey". The rennet is added to cause the milk to curdle, and the resulting liquid solution is a sweet whey solution having the more neutral pH (around 6.5, such as 6.3-6.8) as its production either does not involve acidification, or involves only a very mild acidification. In sweet whey produced with rennet the whey proteins can be somewhat denatured.

The other type of sweet whey protein is ideal whey. Ideal whey is whey which contains undenatured or "native" whey protein. This is generally obtained by filtering milk with a suitably sized membrane. Ideal whey obtained from filtering milk is free from somatic cells, lactic acid bacteria, bacteriophages, remnants of rennet like caseinomacropeptide, and cheese fines, which can be present in sweet rennet whey obtained from a cheese-making process. Ideal whey also has a more neutral pH of around 6.5, such as 6.3-6.8, because it has never been acidified.

Acid whey (also known as sour whey) is a by-product of making acid types of dairy products, such as cottage cheese or strained yoghurt. The sour whey is acidic because lactic acid is used to cause the milk to curdle, and so the pH of the whey protein solution is reduced to yield acid/sour whey (such as around 4.7, such as 4.4 to 4.9). In acid whey the whey proteins can be somewhat denatured.

The whey protein solution in the present method is provided by blending a sweet rennet whey solution and an acid whey solution. The whey in the whey protein solution consists of whey from the sweet rennet whey solution and whey from the acid whey solution. That is, the whey protein solution does not include any added ideal whey. The sweet rennet whey solution is from a hard cheese-making process, i.e. as a by-product. Using whey from a hard-cheese making process also beneficially enables the use of a by-product that would otherwise be disposed of during the manufacture of hard cheeses.

Preferably, the whey protein solution comprises acid whey from fermenting a dairy liquid, preferably the dairy liquid used to provide the cheese curds. Using acid whey from the step of fermenting the dairy liquid (to create the cheese curds and sour whey) is beneficial as it enables this by-product to be used in cream cheese manufacturing rather than being discarded. The use of acid whey also adds beneficial flavour notes and can be used to adjust the product pH.

The sweet rennet whey solution is present in a greater amount by weight than the acid whey solution. The amount by weight includes the amount of water present although, since the solutions are not concentrated, they typically have similar levels of solids contents. That is, preferably, the sweet whey is also present in a greater amount than the acid whey on a dry solids basis.

Preferably a ratio by weight of the sweet whey solution to the acid whey solution blended in step (ii) is from 6:4 to 9:1, preferably from 7:3 to 8:2. Again, this amount by weight includes the amount of water present although, since the solutions are not concentrated, they typically have similar levels of solids contents. Preferably, the sweet whey is present in a ratio by weight to the acid whey of in step (ii) is from 6:4 to 9:1, preferably from 7:3 to 8:2, on a dry solids basis.

Preferably the whey protein solution has a solids content of from 3 to 10wt%, preferably from 4 to 8wt% and most preferably about 6wt%. Preferably each of the sweet rennet whey solution and the acid whey solution has a solids content of from 3 to 10wt%, preferably from 4 to 8wt% and most preferably about 6wt%. These levels of solids are consistent with the levels naturally occurring in the processes from which they are obtained, minimising the requirement for additional processing.

The method comprises a further step of concentrating the whey protein solution by ultrafiltration to a whey protein concentration of from 5 to 15wt%, based on the weight of the concentrated whey protein solution. This step of concentrating the whey protein solution reduces the water content in the solution and makes the subsequent texture-building heat treatment step (vi) possible. Furthermore, this step also preferably removes the lactose and minerals that are soluble in the aqueous solution. In step (ii) the whey protein solution is preferably concentrated by ultrafiltration to a whey protein concentration of from 10 to 12wt%, based on the weight of the concentrated whey protein solution.

Preferably, the whey protein solution has a pH of from 5.7 to 6.1 when it is initially formed. This is the optimum pH range of the whey protein solution in order to solubilise the minerals to a desired degree. If these are not removed then the ultrafiltration step may be less likely to work. This is achieved by providing a blend of acid and sweet wheys, since the value lies between their natural values. Citric acid can be added to further adjust the pH.

In general, the sweet rennet whey and acid whey solutions used in the cream cheese manufacture have a whey protein content of from 0.5 to 1.2wt%, preferably 0.6 to 1wt%. Accordingly, the ultrafiltration step concentrated this around 20X to arrive at the desired 10-12wt% whey protein concentration. At the same time as concentrating the whey, the ultrafiltration process removes lactose and mineral content. Thus, increasing the whey content further is tied to a reduction in the lactose content.

It is critical to increase the whey protein content in order to achieve the desired microstructure when heating and shearing this type of proteins. However, it is also critical to maintain sufficiently high levels of lactose, since this serves to protect the protein from heat damage during the functionalisation and texturisation steps. Increasing the whey content to 10-12wt%, means that the lactose content is around 60wt% of the WPC solids. Increasing the whey content to 15wt% means that the lactose content is around 20wt% of the WPC solids. Beyond this point the whey protein is not sufficiently protected from the subsequent heating steps.

It is also important to increase the solids concentration by ultrafiltration before the cavitation step, which assists in enabling the cavitation to heat the whey protein solution sufficiently. The concentrated whey protein solution preferably has a solids content of 18 to 24wt%. Of these solids, 25 to 75wt% are whey proteins, preferably 40 to 60% and preferably about 55wt%. Preferably, the total protein content is between 8 and 14 wt.%, and more preferably between 10 and 12 wt.%. This is the optimum solids content of the whey protein solution for obtaining a cream cheese with the desired creamy texture.

Preferably, the pH of the concentrated whey protein solution is then adjusted before the cavitation step to obtain a final pH of from 4.5 to 5.1. The preferred pH of the whey protein solution before being subjected to the cavitation step (iv) is between 4.6 and 5.0, and even more preferably about 4.8. Adjusting the pH of the concentrated whey protein solution can be done by either addition of citric acid, or by fermentation with lactic acid bacteria, but is preferably done by the addition of citric acid. Since the whey protein solution is made up using sweet whey and acid whey, the acid whey acts to lower the pH, and less citric acid, if any, is needed.

The method further comprises subjecting the concentrated whey protein solution which contains ideal whey to a cavitation treatment sufficient to heat the whey protein solution to a temperature of at least 70°C to provide a heat-treated whey protein solution. The cavitation step is particularly advantageous in heat-treating the whey protein solution in a specific way that enables the whey protein solution to then develop a creamy texture (with the other ingredients) in the subsequent texture-building heat treatment step (vi). The cavitation can be performed in accordance with the teaching of US 2018024973 which is incorporated herein by reference in its entirety.

Preferably, the cavitation treatment is sufficient to heat the whey protein solution to a temperature of from 75°C to 90°C, preferably 80 to 85 °C. This is the ideal temperature to which the whey protein solution should be heated in order for it to be compatible with the texture-building heat-treatment step (vi).

The method further comprises mixing the cheese curds and the heat-treated whey protein solution to form a mixture. The mixing may be performed with a stirrer, shaker, rotation device, or other commonly-used means for mixing ingredients. Preferably, mixing the cheese curds and the heat-treated whey protein solution is done by homogenisation.

Preferably, the heat-treated whey protein solution is added to the cheese curds in a weight ratio of heat-treated whey protein solution to cheese curds of from 1:19 to 2:3, preferably 1:15 to 1:5. This ratio is the optimum ratio for the subsequent texture-building heat-treatment step, in order to yield a cream cheese with a desirable creamy texture.

The method further comprises subjecting the mixture to a texture-building heat-treatment step to form the cream cheese. Such a process preferably comprises heating the mixture to a temperature of from 65 to 90°C with shearing for a period of at least 15 minutes. Such a process is described in more detail in EP 2649884, which is incorporated herein by reference in its entirety.

Preferably, the method further comprises filling the cream cheese into packaging, preferably directly from the texture-building heat-treatment. Filling the cream cheese into packaging directly from the texture-building heat-treatment allows the liquid cream cheese (that is liquid due to still being warm) to be easily poured into the packaging, and to set in the packaging, rather than having to be cut into slices to be packaged, which is more efficient. The cream cheese is then preferably allowed to cool in a cooling chamber for at least 12 hours before a sensory evaluation. The cream cheese will then be sent for sale within a few days or weeks.

Preferably, the step of mixing the cheese curds and the heat-treated whey protein solution to form a mixture further comprises the addition of one or more further ingredients selected from the group consisting of milk solids, salt, stabilisers and gums. These further ingredients can help to give the cream cheese a longer shelf life.

Preferably, the method is a continuous process from the step of subjecting the whey protein solution to a cavitation treatment to the formation of the cream cheese. Having steps (iii) to (v) as a continuous process is beneficial as the equipment can be used at maximum efficiency, and storage mediums to hold mixtures for significant periods of time in between the steps are not required.

Preferably in the method described herein there is no evaporation concentration step performed on any of: the sweet rennet whey solution; the acid whey solution; or the when protein solution.

According to a further aspect there is provided a cream cheese obtainable by the method described herein. The cream cheese obtained by the method is unique and can be distinguished from other cream cheeses. In particular, it has a smaller particle size when inspected through a microscope due to the cavitation process and it has a more homogeneous texture as a consequence of the texture building step.

Preferably, the cream cheese comprises less than 33wt% total solids. The process beneficially enables cream cheese to be produced with less than 33 wt% total solids, while still having a creamy mouthfeel and texture, which enables more cream cheese to be produced for a given amount of solids. This range distinguishes the cream cheese obtained with a textured building step from cream cheese which has not been produced with such a step. For example, a full fat cream cheese might have 32.5wt% total solids when made with a texture building step, but around 37wt% without. A light cream cheese might have 26wt% total solids when made with a texture building step, but around 35wt% without.

Preferably, the cream cheese is a full-fat cream cheese with a fat content of less than 63 wt.%.

The whey protein concentrate can then be incorporated into the final cream cheese in different amounts, to result in cream cheeses with different fat contents. In particular, a full fat cream cheese can be made which has 6 to 8 wt.% of whey protein concentrate, by weight of the cream cheese. A light cream cheese product has from 10 to 14 wt.% whey protein concentrate, by weight of the cream cheese; and an extra-light cream cheese product has from 35 to 40 wt.% whey protein concentrate, by weight of the cream cheese product. Incorporating more whey protein concentrate into the cream cheese enables less fat to be in the final product, whilst still being able to develop the creamy texture in the texture-building heat-treatment step.

According to one embodiment the product is a full fat cream cheese and 6-8wt% of product is WPC. WPC is 23wt% solids of which 50-60wt% is protein. According to another embodiment, the product is a light cream cheese and 10-14wt% of product is WPC. WPC is 23wt% solids of which 50-60wt% is protein. According to another embodiment the cream cheese is an Extra light cream cheese and 35 to 40wt% of product is WPC. WPC is 23wt% solids of which 50-60wt% is protein.

Assessment of cream cheeses can be measured using the stevens hardness test (cold), where a cream cheese should have a value of around 100g, and certainly at least 80g. The cold stevens hardness test is performed using a texture analyser, and includes measuring the peak force needed to puncture the cream cheese product with a conical 45° probe.

The invention will now be described in relation to the following non-limiting figures, in which:
- Figure 1 shows a flow chart of a method of manufacturing cream cheese according to the prior art.
- Figure 2 shows a flow chart of the method described herein.

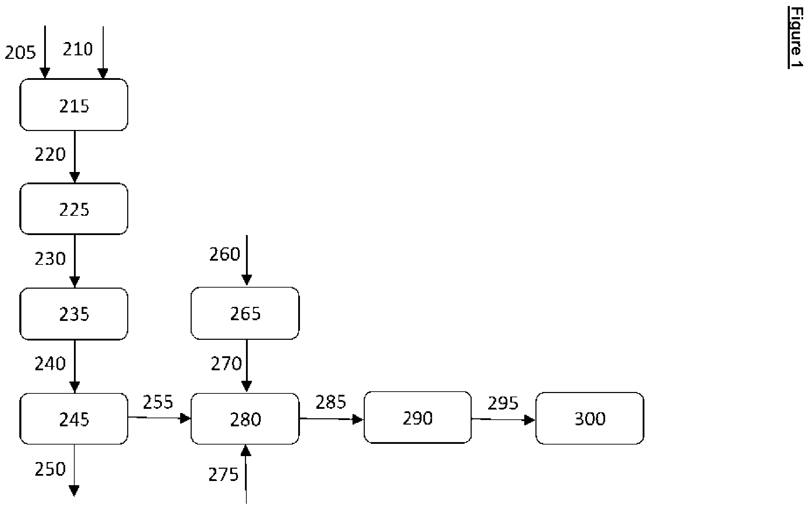

With regard to Figure 1, a raw milk 205 and cream 210 are mixed in a mixing unit 215. The mixture 220 of raw milk 205 and cream 210 is then passed to a pasteurisation/ homogenisation unit 225, where the mixture 220 is subjected to pasteurisation and homogenisation.

The resulting pasteurised mixture 230 is passed to a fermentation unit 235, where the pasteurised mixture 230 is fermented with an added culture.

The fermented mixture 240 is then passed to a concentration unit for curd 245, where the sour whey 250 is removed and the curds 255 are passed to a mixing unit 280. The concentration unit for curd 245 may also be referred to as a separator.

Whey protein concentrate 270 and additional ingredients 275 are added to the mixing unit 280, to be mixed with the curds 255. The additional ingredients 275 include additives and stabilisers.

The whey protein concentrate 270 comprises heat-treated acid and sweet wheys and has a solids level of 20-25wt%, of which about half is whey protein. The whey protein concentrate 270 is obtained by providing a concentrated whey protein solution 260 containing sweet whey and sour whey, and passing the whey protein solution 260 to a heating and homogenisation unit 265, where the whey protein solution 260 is subjected to a process of homogenisation with simultaneous heating to denature the whey protein.

The heated and homogenised mixture 270 is then mixed with the curds 255 and other additional ingredients 275 in the mixing unit 280 to provide a combined mixture 285. The combined mixture 285 is passed to a texture-building heat-treatment unit 290, where the combined mixture 285 is heated to a temperature of from 65 to 90°C, preferably about 80 °C, with shearing for a period of at least 15 minutes, to provide a cream cheese product 295.

The cream cheese product 295 is then sent to a packaging facility 300, whilst it is still at an elevated temperature, to be packaged into containers.

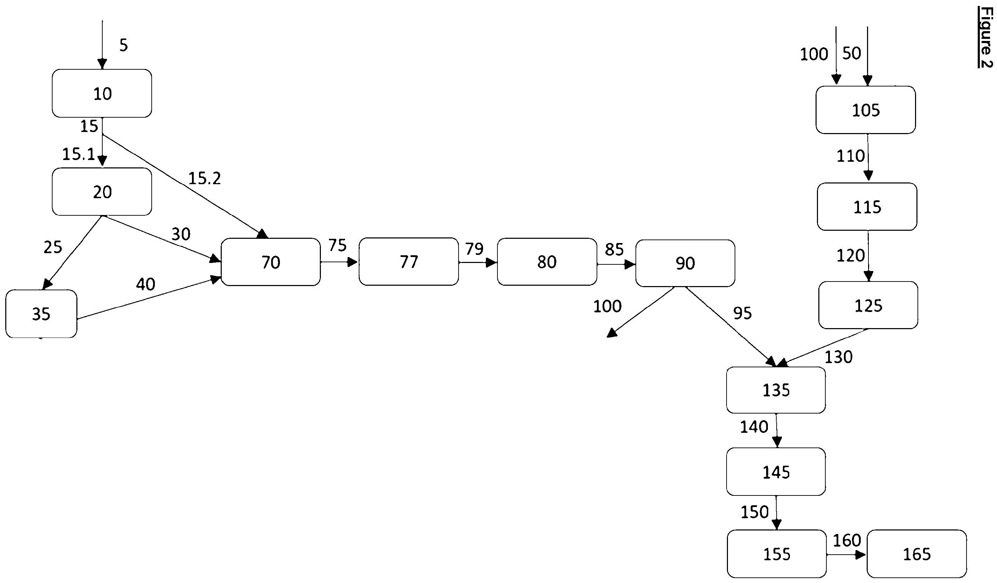

With regard to Figure 2, a raw milk 5 is provided. This is subjected to a treatment 10 to pasteurise and/or homogenise the raw milk 5 and provide a processed milk 15 suitable for cheese-making.

A first portion 15.1 of the processed milk 15 is passed to a centrifugal separator 20 to separate a skimmed milk 25 from a cream 30.

The skimmed milk 25 is passed to a microfiltration unit 35, where a micro-filtered milk concentrate 40 is retained as a retentate. The retentate is primarily a casein rich concentrate.

The micro-filtered milk concentrate 40, the cream 30, and a second portion 15.2 of processed milk 15 are passed to a mixer 70 to form a dairy liquid 75. The dairy liquid 75 is then pasteurised and homogenised in a pasteurisation and homogenisation unit 77. The resulting pasteurised and homogenised dairy liquid 79 is then passed to a fermentation device 80 to ferment the dairy liquid to form a mixture 85 of cheese curds 95 and acid whey 100.

The mixture 85 is passed to a concentration unit 90, for ultrafiltration and to separate the cheese curds 95 from the acid whey 100.

Acid whey 100 and sweet whey 50 (from a hard cheese manufacture process) are mixed together in a mixing unit 105 to form a whey protein solution 110. The whey protein solution 110 is passed to an ultrafiltration unit 115 to concentrate the protein content of the whey protein solution 110 to produce a concentrated whey protein solution 120.

The pH of the concentrated whey protein solution 120 is adjusted to be between 4.8 and 4.9 by the addition of citric acid, before it is then passed to a cavitator 125 where the concentrated whey protein solution 120 is subjected to cavitation treatment sufficient to heat the solution to a temperature of at least 70 °C, preferably about 80 °C to provide a heat-treated whey protein solution 130.

The concentrated heat-treated whey protein solution 130 and the cheese curds 95 are mixed in a mixer 135 to form a first mixture 140. The first mixture 140 is passed to a pasteurisation and homogenisation unit 145 which subjects the mixture to pasteurisation and homogenisation to produce a pasteurised and homogenised first mixture 150. The pasteurised and homogenised first mixture 150 is then passed to a texturization unit 155, which subjects the mixture 150 to a texture-building heat-treatment process that includes heating the mixture 150 to a temperature of from 65 to 90°C with shearing for a period of at least 15 minutes. This step then provides a cream cheese 160.

The cream cheese is then filled into packages whilst it is still warm, in a filling step 165.

The invention will now be described in relation to the following non-limiting example.

### Examples

### Example 1

Milk, cream and micro-filtrated milk concentrate were blended to produce a dairy liquid, comprising 15% solids, 5.5% fat, 4% protein and 4.5% lactose. This dairy liquid was pasteurized, homogenized and subjected to mesophilic fermentation with lactic acid bacteria at 20 °C to a final pH between 4.8 and 5.0. After stirring of the formed coagulum, it was separated into concentrated curd and whey using membrane ultrafiltration with a concentration factor of 2.2 to 2.5x. The curd was blended with a whey protein concentrate.

The whey protein concentrate was produced by mixing of following streams to a total amount of 100 weight percent:
- Acid whey with 6.0% total solids, resulting from separation via centrifugation of fermented curds and whey in the cream cheese process in an amount of 25 wt.%,
- Sweet whey concentrate obtained from hard cheese production with 6.0% total solids in an amount of 75 wt.%.

The blend obtained from these two streams was subjected to ultrafiltration to provide a concentrated whey solution (WPC) with 20.3% solids and 11.8% protein content.

The WPC was subjected to hydrodynamic cavitation at 81 °C (end temperature) with a denaturation degree of 75% prior to mixing with the curds.

A comparative batch was prepared by mixing a separate portion of the same curd with a separate portion of the same Whey Protein Concentrate after standard heat treatment to a denaturation degree of 79.0% (i.e. thermal treatment instead of cavitation).

Both mixtures of the curd and their respective whey protein additions were then further processed in a separate manner with pasteurization and homogenization into a dairy liquid, which is then texturized with a final creaming step.

The final product has 26% dry matter, 11.0 % fat, 7.4 %protein, 5% lactose.

There is a significant difference in the texturizing performance. Despite the similar denaturation extent, the cavitation process provides a composition where the texture building starts much sooner. This makes the process much more economically viable, since the product can be produced in a fraction of the time.

It is specifically noted that the inventive example reaches a higher maximum viscosity (i.e. 3600cP vs 2800 cP). Furthermore, it is noted that the comparative product only reaches 2000cP after 165 minutes, whereas this is achieved in 30 minutes for the inventive composition.

Unless specified to the contrary, percentages herein are by weight.

References herein to "solids" refers to the material which is left once all water has been removed. Therefore, a solution comprising 20wt% solids also contains the balance (i.e. 80wt%) water.

## Claims

1. A method for the manufacture of a cream cheese, the method comprising:
(i) providing cheese curds,
(ii) providing a whey protein solution by blending a sweet rennet whey solution and an acid whey solution, wherein the sweet rennet whey solution is present in a greater amount by weight than the acid whey solution,
(iii) concentrating the whey protein solution by ultrafiltration to a whey protein concentration of from 5 to 15wt%, based on the weight of the concentrated whey protein solution,
(iv) subjecting the concentrated whey protein solution to a cavitation treatment sufficient to heat the concentrated whey protein solution to a temperature of at least 70°C to provide a heat-treated whey protein solution,
(v) mixing the cheese curds and the heat-treated whey protein solution to form a mixture, and
(vi) subjecting the mixture to a texture-building heat-treatment to form the cream cheese,
wherein the whey in the whey protein solution provided in step (ii) consists of whey from the sweet rennet whey solution and whey from the acid whey solution.

2. The method according to claim 1, wherein:
(a) the whey protein solution in step (ii) has a solids content of from 4 to 8wt%; and/or
(b) the concentrated whey protein solution has a solids content of 18 to 24wt%.

3. The method according to any preceding claim, wherein each of the sweet rennet whey solution and the acid whey solution has a solids content of from 3 to 10wt%, preferably from 4 to 8wt%.

4. The method according to any preceding claim, wherein a ratio by weight of the sweet rennet whey solution to the acid whey solution blended in step (ii) is from 6:4 to 9:1, preferably from 7:3 to 8:2.

5. The method according to any preceding claim, there is no evaporation concentration step performed on any of: the sweet rennet whey solution; the acid whey solution; or the when protein solution.

6. The method according to any preceding claim, wherein:
(A) in step (ii) the whey protein solution is concentrated by ultrafiltration to a whey protein concentration of from 10 to 12wt%, based on the weight of the concentrated whey protein solution, and/or
(B) after step (ii) and before step (v) the pH of the whey protein solution is adjusted to obtain a pH of from 4.5 to 5.1, preferably from 4.8 to 4.9, by fermentation with lactic acid bacteria, or by addition of citric acid.

7. The method according any preceding claim, wherein the cheese curds are obtained in a method comprising:
providing a dairy liquid comprising cream, a micro-filtered milk concentrate, and milk;
fermenting the dairy liquid to form the cheese curds and an acid whey; and
separating the cheese curds from the acid whey by ultrafiltration, and
preferably, wherein the dairy liquid is obtained by:
separating milk into cream and skimmed milk,
micro-filtering the skimmed milk to produce a micro-filtered milk concentrate as a retentate and ideal whey as a permeate, and
mixing the cream and micro-filtered milk concentrate together with the milk to form the dairy liquid.

8. The method according to claim 7, wherein the whey protein solution comprises acid whey from fermenting the dairy liquid.

9. The method according to any preceding claim, wherein the cavitation treatment is sufficient to heat the whey protein solution to a temperature of from 75°C to 90°C.

10. The method according to any preceding claim, wherein the texture-building heat-treatment comprises heating the mixture to a temperature of from 65°C to 90°C with shearing for a period of at least 15 minutes.

11. The method according to any preceding claim, wherein the heat-treated whey protein solution is added to the cheese curds in a weight ratio of heat-treated whey protein solution to cheese curds of from 1:19 to 2:3.

12. The method according to any preceding claim, wherein:
(I) the method further comprises filling the cream cheese into packaging, preferably directly from the texture-building heat-treatment, and/or
(II) wherein the method is a continuous process from the step of subjecting the whey protein solution to a cavitation treatment to the formation of the cream cheese.

13. The method according to any preceding claim, wherein the step of mixing the cheese curds and the heat-treated whey protein solution to form a mixture further comprises the addition of one or more further ingredients selected from the group consisting of salt, stabilisers and gums.

14. The method according to any preceding claim, wherein the cream cheese comprises less than 33wt% total solids.

15. A cream cheese obtainable by the method of any preceding claim.

## Patentansprüche

1. Verfahren zum Herstellen von Rahmkäse, wobei das Verfahren umfasst:
(i) Bereitstellen von Käsebruch,
(ii) Bereitstellen einer Molkenproteinlösung durch Mischen einer süßen Labmolkenlösung und einer sauren Molkenlösung, wobei die süße Labmolkenlösung in einer größeren Gewichtsmenge als die saure Molkenlösung vorhanden ist,
(iii) Konzentrieren der Molkenproteinlösung durch Ultrafiltration auf eine Molkenproteinkonzentration von 5 bis 15 Gew.-%, bezogen auf das Gewicht der konzentrierten Molkenproteinlösung,
(iv) Unterziehen der konzentrierten Molkenproteinlösung einer Kavitationsbehandlung, die ausreicht, um die konzentrierte Molkenproteinlösung auf eine Temperatur von mindestens 70 °C zu erhitzen, um eine wärmebehandelte Molkenproteinlösung bereitzustellen,
(v) Mischen des Käsebruchs und der wärmebehandelten Molkenproteinlösung zum Bilden einer Mischung, und
(vi) Unterziehen der Mischung einer texturbildenden Wärmebehandlung zum Bilden des Rahmkäses,
wobei die Molke in der Molkenproteinlösung, die in Schritt (ii) bereitgestellt wird, aus Molke aus der süßen Labmolkenlösung und Molke aus der sauren Molkenlösung besteht.

2. Verfahren nach Anspruch 1, wobei:
(a) die Molkenproteinlösung in Schritt (ii) einen Feststoffgehalt von 4 bis 8 Gew.-% aufweist; und/oder
(b) die konzentrierte Molkenproteinlösung einen Feststoffgehalt von 18 bis 24 Gew.-% aufweist.

3. Verfahren nach einem der vorstehenden Ansprüche, wobei jede der süßen Labmolkenlösung und der sauren Molkenlösung einen Feststoffgehalt von 3 bis 10 Gew.-%, vorzugsweise von 4 bis 8 Gew.-%, aufweist.

4. Verfahren nach einem der vorstehenden Ansprüche, wobei ein Gewichtsverhältnis der süßen Labmolkenlösung zu der Säuremolkenlösung, die in Schritt (ii) gemischt werden, von 6:4 bis 9:1, vorzugsweise von 7:3 bis 8:2, beträgt.

5. Verfahren nach einem der vorstehenden Ansprüche, wobei kein Verdampfungskonzentrationsschritt durchgeführt wird an: der süßen Labmolkenlösung; der sauren Molkenlösung; oder der Molkenproteinlösung.

6. Verfahren nach einem der vorstehenden Ansprüche, wobei:
(A) in Schritt (ii) die Molkenproteinlösung durch Ultrafiltration auf eine Molkenproteinkonzentration von 10 bis 12 Gew.-%, bezogen auf das Gewicht der konzentrierten Molkenproteinlösung, konzentriert wird, und/oder
(B) nach Schritt (ii) und vor Schritt (v) der pH-Wert der Molkenproteinslösung angepasst wird, um einen pH-Wert von 4,5 bis 5,1, vorzugsweise von 4,8 bis 4,9, durch Fermentation mit Milchsäurebakterien oder durch Zugabe von Zitronensäure zu erhalten.

7. Verfahren nach einem der vorstehenden Ansprüche, wobei der Käsebruch in einem Verfahren erhalten wird, das umfasst:
Bereitstellen einer Molkereiflüssigkeit, die Sahne, ein mikrofiltriertes Milchkonzentrat und Milch umfasst;
Fermentieren der Molkereiflüssigkeit zum Bilden des Käsebruchs und einer sauren Molke; und
Trennen des Käsebruchs von der sauren Molke durch Ultrafiltration, und
vorzugsweise, wobei die Molkereiflüssigkeit erhalten wird durch:
Trennen von Milch in Sahne und Magermilch,
Mikrofiltrieren der Magermilch zum Herstellen eines mikrofiltrierten Milchkonzentrats als ein Retentat und idealerweise Molke als ein Permeat, und
Mischen der Sahne und des mikrofiltrierten Milchkonzentrats zusammen mit der Milch zum Bilden der Molkereiflüssigkeit.

8. Verfahren nach Anspruch 7, wobei die Molkenproteinlösung saure Molke aus der Fermentierung der Molkereiflüssigkeit umfasst.

9. Verfahren nach einem der vorstehenden Ansprüche, wobei die Kavitationsbehandlung ausreicht, um die Molkenproteinlösung auf eine Temperatur von 75 °C bis 90 °C zu erhitzen.

10. Verfahren nach einem der vorstehenden Ansprüche, wobei die texturbildende Wärmebehandlung das Erhitzen der Mischung auf eine Temperatur von 65 °C bis 90 °C unter Scherung für einen Zeitraum von mindestens 15 Minuten umfasst.

11. Verfahren nach einem der vorstehenden Ansprüche, wobei die wärmebehandelte Molkenproteinlösung dem Käsebruch in einem Gewichtsverhältnis von wärmebehandelter Molkenproteinlösung zu Käsebruch von 1:19 bis 2:3 zugesetzt wird.

12. Verfahren nach einem der vorstehenden Ansprüche, wobei:
(I) das Verfahren ferner das Abfüllen des Rahmkäses in Verpackungen umfasst, vorzugsweise direkt aus der texturbildenden Wärmebehandlung, und/oder
(II) wobei das Verfahren ein kontinuierlicher Prozess von dem Schritt des Unterziehens der Molkenproteinlösung einer Kavitationsbehandlung bis zur Bildung des Rahmkäses ist.

13. Verfahren nach einem der vorstehenden Ansprüche, wobei der Schritt des Mischens des Käsebruchs und der wärmebehandelten Molkenproteinlösung zum Bilden einer Mischung ferner die Zugabe eines oder mehrerer weiterer Inhaltsstoffe, ausgewählt aus der Gruppe bestehend aus Salz, Stabilisatoren und Gummis, umfasst.

14. Verfahren nach einem der vorstehenden Ansprüche, wobei der Rahmkäse weniger als 33 Gew.-% Gesamtfeststoffe umfasst.

15. Rahmkäse, erhältlich durch das Verfahren nach einem der vorstehenden Ansprüche.

## Revendications

1. Procédé destiné à la fabrication d'une crème de fromage, le procédé comprenant :
(i) la fourniture de grains de fromage,
(ii) la fourniture d'une solution de protéines de lactosérum en mixant une solution de lactosérum de présure douce et une solution de lactosérum acide, dans lequel la solution de lactosérum de présure douce est présente en une plus grande quantité en poids que la solution de lactosérum acide,
(iii) la concentration de la solution de protéines de lactosérum par ultrafiltration jusqu'à une concentration en protéines de lactosérum allant de 5 à 15 % en poids, en fonction du poids de la solution de protéines de lactosérum concentrée,
(iv) le fait de soumettre la solution de protéines de lactosérum concentrée à un traitement de cavitation suffisant pour chauffer la solution de protéines de lactosérum concentrée à une température d'au moins 70 °C pour fournir une solution de protéines de lactosérum traitée thermiquement,
(v) le mélange des grains de fromage et de la solution de protéines de lactosérum traitée thermiquement pour former un mélange, et
(vi) le fait de soumettre le mélange à un traitement thermique de développement de texture pour former la crème de fromage,
dans lequel le lactosérum dans la solution de protéines de lactosérum fournie à l'étape (ii) est constitué de lactosérum provenant de la solution de lactosérum de présure douce et de lactosérum provenant de solution de lactosérum acide.

2. Procédé selon la revendication 1, dans lequel :
(a) la solution de protéines de lactosérum à l'étape (ii) a une teneur en matières solides allant de 4 à 8 % en poids ; et/ou
(b) la solution de protéines de lactosérum concentrée a une teneur en matières solides de 18 à 24 % en poids.

3. Procédé selon l'une quelconque revendication précédente, dans lequel chacune parmi la solution de lactosérum de présure douce et la solution de lactosérum acide a une teneur en matières solides allant de 3 à 10 % en poids, de préférence de 4 à 8 % en poids.

4. Procédé selon l'une quelconque revendication précédente, dans lequel un rapport en poids de la solution de lactosérum de présure douce à la solution de lactosérum acide faisant l'objet d'un mélange à l'étape (ii) va de 6:4 à 9:1, de préférence de 7:3 à 8:2.

5. Procédé selon l'une quelconque revendication précédente, il n'y a aucune étape de concentration par évaporation mise en œuvre sur l'une quelconque parmi : la solution de lactosérum de présure douce ; la solution de lactosérum acide ; ou la solution de protéines de lactosérum.

6. Procédé selon l'une quelconque revendication précédente, dans lequel :
(A) à l'étape (ii) la solution de protéines de lactosérum est concentrée par ultrafiltration à une concentration en protéines de lactosérum allant de 10 à 12 % en poids, en fonction du poids de la solution de protéines de lactosérum concentrée, et/ou
(B) après l'étape (ii) et avant l'étape (v) le pH de la solution de protéines de lactosérum est ajusté pour obtenir un pH allant de 4,5 à 5,1, de préférence de 4,8 à 4,9, par fermentation avec des bactéries d'acide lactique, ou par addition d'acide citrique.

7. Procédé selon l'une quelconque revendication précédente, dans lequel les grains de fromage sont obtenus dans un procédé comprenant :
la fourniture d'un liquide laitier comprenant de la crème, un concentré de lait microfiltré, et du lait ;
la fermentation du liquide laitier pour former les grains de fromage et un lactosérum acide ; et
la séparation des grains de fromage du lactosérum acide par ultrafiltration, et
de préférence, dans lequel le liquide laitier est obtenu par :
la séparation de lait en crème et en lait écrémé,
la microfiltration du lait écrémé pour produire un concentré de lait microfiltré en tant que rétentat et un lactosérum idéal en tant que perméat, et
le mélange de la crème et du concentré de lait microfiltré conjointement avec le lait pour former le liquide laitier.

8. Procédé selon la revendication 7, dans lequel la solution de protéines de lactosérum comprend du lactosérum acide provenant de la fermentation du liquide laitier.

9. Procédé selon l'une quelconque revendication précédente, dans lequel le traitement de cavitation est suffisant pour chauffer la solution de protéines de lactosérum à une température allant de 75 °C à 90 °C.

10. Procédé selon l'une quelconque revendication précédente, dans lequel le traitement thermique de développement de texture comprend le chauffage du mélange à une température allant de 65 °C à 90 °C avec cisaillement pendant un laps de temps d'au moins 15 minutes.

11. Procédé selon l'une quelconque revendication précédente, dans lequel la solution de protéines de lactosérum traitée thermiquement est ajoutée aux grains de fromage dans un rapport pondéral de la solution de protéines de lactosérum traitée thermiquement aux grains de fromage allant de 1:19 à 2:3.

12. Procédé selon l'une quelconque revendication précédente, dans lequel :
(I) le procédé comprend en outre le remplissage de la crème de fromage dans un emballage, de préférence directement à partir du traitement thermique de développement de texture, et/ou
(II) dans lequel le procédé est un processus continu à partir de l'étape consistant à soumettre la solution de protéines de lactosérum à un traitement de cavitation jusqu'à la formation de la crème de fromage.

13. Procédé selon l'une quelconque revendication précédente, dans lequel l'étape de mélange des grains de fromage et de la solution de protéines de lactosérum traitée thermiquement pour former un mélange comprend en outre l'addition d'un ou plusieurs ingrédients supplémentaires choisis dans le groupe constitué de sel, stabilisants et gommes.

14. Procédé selon l'une quelconque revendication précédente, dans lequel la crème de fromage comprend moins de 33 % en poids des matières solides totales.

15. Crème de fromage pouvant être obtenue par le procédé selon l'une quelconque revendication précédente.
